# EUROPEAN PATENT APPLICATION

(11) **EP 2 343 895 A1**
(43) Date of publication of application: **13.07.2011**
(21) Application number: 10150268.0
(22) Date of filing: 07.01.2010
(51) Int. Cl.: H04N 7/24

(54) **Configuration and management of a headend facility for video and/or audio signals**

(71) Applicant: Triax A/S, 8783 Hornsyld (DK)
(72) Inventor: Friis, Michael, 8700 - Horsens (DK); Skov, Henrik, 8240 - Risskov (DK)
(74) Representative: Inspicos A/S

(57) **Abstract**

A method for configuring a headend facility for receiving television or radio signals for processing and distribution thereof to a plurality of recipients comprises the creation of a data file containing user-specified selection of service particulars. The configuration file is loaded into a hardware module of the headend facility, which is configured accordingly. A method for managing a digital television signal comprises removing a predetermined part of the service signals from the output bit stream while preserving another portion of the service signals, in case the accumulated bit rate of the received service signals exceeds the bandwidth available for the output. A headend facility is provided, which is configured to receive at least two input signals received by separate receptors, e.g. antennas or LNBs, and to output services received by different receptors on a single shared output medium or a single shared output frequency.

## Description

### Technical field

The present invention relates to a headend facility for receiving video and/or audio signals, notably television and radio signals, for processing and distribution to a plurality of recipients, and in particular to a method for configuring such a headend facility. The invention further relates to a method for managing a digital television signal, which addresses problems related to dropout periods occurring when the bandwidth available at a particular frequency is exceeded by the accumulated bandwidths of the services multiplexed on to that frequency. Further, the invention relates to a headend facility, which allows services received by different receptors, i.e. different antennas, satellite dishes or LNBs, to be multiplexed on to a single output frequency.

The headend facility is applicable at various sites, at which a plurality of received television or radio services are to be distributed to a number of recipients or end users, such as at hotels, hospitals, apartment houses, dormitories, nursing homes, hospitals, and prisons. Further, the headend facility may be used by cable TV providers for distribution of TV or radio signals through a cable TV network.

### Background of the invention

A headend is a master facility for receiving television and/or radio signal for processing and distribution over a network, such as over a cable television system. Headend facilities normally have various satellite television dishes and/or antennas for reception of signals transmitted through the atmosphere, e.g. satellite signals or radio frequency signals. Usually, the headend facility comprises a plurality of receivers for receiving respective services that are to be distributed. Once the signals have been processed they may be sent over coaxial cables and re-amplified as needed. Digital services are multiplexed, with multiple services being multiplexed on to one specific frequency having a bandwidth of e.g. 6 MHz. During the installation phase of the headend facility, a system operator, such as an appropriately skilled technician, typically places a plurality of services, e.g. 8, on to one single frequency. Subscribers to cable TV networks may need set top boxes or cable cards to receive digital signals provided through the network.

The headend facility typically comprises a basic hardware module, which is configured to receive a plurality of input services from various satellite dishes and to deliver an appropriate output, such as a PAL signal to be transmitted via a co-axial cable. Various optional hardware components may be deployed as needed. For example, decryption cards may be applied for decrypting received signals at a front end of the basic hardware module, and encryption cards may be applied at a back end of the basic hardware module for encryption of signals. Further, various receivers, service modulators, cables, etc. may be applied.

The configuration and installation of a headend facility is generally a comprehensive task, which involves a substantial amount of operator time, in particular with regard to configuration of digital service multiplexing. Once the operator has selected, ordered and retrieved the hardware components needed, including receivers, modulators, cables etc., the hardware modules of the headend facility are assembled, and then the task of multiplexing the digital services starts. Normally, this is done by first selecting a first frequency, on to which various services are to be multiplexed, and then multiplexing a plurality of services on to that frequency. This is typically carried out based on a trial and error procedure, in which the operator assigns one service at a time to the selected frequency until the available bandwidth is exceeded, whereupon the operator removes one service. During the step of fitting services into the selected frequency, the operator may draw on past experience, from which he knows the approximate bandwidth occupied by each single service. However, the bandwidth occupied by each service varies in dependence of the content of the continuously varying signal received. For example, a soccer game typically occupies more bandwidth than e.g. a talk show, due to high video data density and rapidly changing images, and accordingly the operator is usually not able to ensure that the services multiplexed on to a specific frequency in fact will be appropriately transmitted subsequently. This is because, at a point in future, the accumulated bandwidth of the services may exceed the bandwidth available at the selected frequency, even though it did not at the point of time the service multiplexing was configured. Once a plurality of signals has been multiplexed on to the first frequency, further services are multiplexed on to a second frequency by repeating the aforedescribed procedure.

If, in the subsequent transmission of television signals, the accumulated bandwidth occupied by the plurality of television signals multiplexed on to a single frequency exceeds the bandwidth available, headend hardware traditionally react by cutting off random parts of the output on that frequency. Cable TV users and other recipients will hence experience dropouts on all or some services multiplexed on to that frequency. Such dropouts typically occur for relatively short moments of time, such as a few minutes, however they may last longer. They may e.g. occur as missing picture or sound fragments. Cable TV providers are greatly concerned about such dropouts, however it has hitherto been virtually impossible to provide systems, which completely eliminate the risk of dropouts.

Television and radio signals are traditionally received by means of a plurality of receptors. Terrestrial signals are typically received by means of antennas, and satellite signals are received by means of satellite dishes. Each satellite dish may comprise a plurality of receiving heads, i.e. so-called a low-noise block downconverter or LNB. The LNB converts the signals from electromagnetic or radio waves to electrical signals. Further several antennas and satellite dishes are typically set up in order for, e.g., a cable network provider to receive all services needed. Headend facilities have hitherto been provided to allow signals received by such plurality of receptors to be processed by separate hardware modules, each providing a PAL output through a co-axial cable. Hence, each antenna and/or each satellite receptor LNB is connected to separate hardware modules, each having a co-axial cable at its back end providing a PAL output signal. The respective PAL signals of the separate co-axial output cables may be combined in a so-called combiner, which combines the signals of a plurality of co-axial cables into a single co-axial cable. Though such a setup serves it purpose of distributing the services to users, it does not allow services received by different receptors to be packed together on a single frequency.

### Description of the invention

It is an object of embodiments of the present invention to provide a method for configuring a headend facility for receiving video and/or audio signals for processing and distribution thereof to a plurality of receptions, which facilitates the configuration task. It is a further object of embodiments of the present invention to provide a method for managing a digital television signal, which minimizes the nuisance experienced by users and recipients during dropout periods due to bandwidth overflow. It is a further object of objects of the invention to provide a headend facility, which allows services received by different receptors, i.e. different antennas, satellite dishes or LNBs, to be multiplexed on to a single output frequency.

In a first aspect, the invention provides a method for configuring a headend facility for receiving video and/or audio signals for processing and distribution thereof to a plurality of recipients, the method comprising:
- receiving a user input specifying a selection of service particulars of the video and/or audio signals to be distributed;
- creating a configuration data file containing the user-specified selection of service particulars and/or ;
- loading said configuration data file into a hardware module of the headend facility for causing the headend facility to receive and distribute video and/or signals in accordance with the user-specified selection of service particulars contained in the configuration data file.

The invention also provides a headend facility for receiving video and/or audio signals for processing and distribution thereof to a plurality of recipients, the headend facility being configured by the above method.

It will be appreciated that the present method may be a computer-implemented method, which may be conducted at the headend facility itself or at a site remote there from. By allowing the user-specified selection of service particulars to be loaded into a file, which in turn may be loaded into the hardware module of the headend facility, the operator may conveniently change and modify the configuration as the procedure progresses. For example, if the user-specified selection of service particulars includes service multiplexing information, including identification of a plurality of services multiplexed on to a single output frequency, the operator may easily move a service from one output frequency to another. This may for example be carried out in a graphical user interface of a computer system, wherein services may be moved from one output frequency by drag and drop. The initial service selection may be performed by selecting services from a predefined list of available services. The list may be populated automatically, e.g. by loading of a file containing all available television or radio services, or it may be populated in a manual or automatic procedure, which takes place once the available input is known.

In the context of all aspects of the present invention, the term 'service' is to be understood as a channel, e.g. a television or radio channel, such as CNN or BBC.

In the context of all aspects of the present invention, the term 'multiplexing' refers to the process of combining digital or analogue signals into a shared medium or a shared frequency. In one embodiment, multiplexing as used herein refers to the provision of an MPEG-2 bitstream in accordance with the ISO/IEC 13818-1 standard.

Generally, the step of receiving the user input may be performed through a user interface of a computer system, which is configured to allow a user or operator to assign a plurality of services to a selected output frequency. The user interface may further be configured to display a representation of the accumulated bandwidth occupied by the services assigned to the selected frequency. Such representation is preferably graphical to illustrate the estimated bandwidth of each of the services assigned to a particular frequency and to further compare the accumulated estimated bandwidths to the total bandwidth available.

The user interface may be configured to allow the user or operator to remove a service assigned to the selected frequency, before the configuration data file is loaded into the hardware module of the headend facility. Further, the user interface may include an indication of a recommended limit for the accumulated estimated bandwidths of services assigned to a particular frequency. Hence, if the user or operator determines from the comparison between accumulated estimated bandwidths and the available bandwidth that the available bandwidth or the recommend limit is exceeded, he may remove one or more services from the frequency before the configuration data file is eventually finalized.

The estimated bandwidth of each service may be provided by a data file created on the basis of statistical processing of historical bandwidth occupation of each of service. It will hence be appreciated that, if such data are available to the user or operator, then service multiplexing can be optimized in the sense that the available bandwidth on each output frequency can be occupied to the largest extent possible, as the amount of bandwidth, which is not used, can be minimized by building the individual services into the various frequencies in a way that comes as close to the recommended limit on each output frequency as possible without exceeding it.

In one embodiment, the headend may be configured to receive at least two categories of input signals selected from the group consisting of:
- a terrestrial analogue television signal transmitted through the atmosphere;
- a terrestrial digital television signal, such as a DVB signal, transmitted through the atmosphere;
- a DVB or an IP television signal transmitted through a cable or by wireless radio frequency transmission;
- a digital television signal transmitted via satellite;
- a digital or analogue radio signal; and
- an IP television or radio signal transmitted through a cable or by wireless radio frequency transmission.

The terrestrial digital television signal may for example comprise a DVB-T or DVB-T2 signal. The DVB signal transmitted through a cable may for example comprise a DVB-C signal. The digital or analogue radio signal may e.g. be transmitted through a cable or by wireless radio frequency transmission.

The term DVB in the context of all aspects of the present invention should be understood to embrace all types of digital formats, including but not limited to DVB-C, DVB-T and DVB-T2.

The headend facility may further comprise an integrated hardware component configured to receive the at least two categories of input signals, and to distribute the television and/or radio signals in accordance with the user-specified selection of service particulars via at least two categories of output signals selected from the group consisting of:
- an analogue television signal transmitted through a cable, such as an analogue PAL signal transmitted through a co-axial cable;
- a digital television signal transmitted through a cable, such as a DVB signal transmitted through a co-axial cable;
- an IP television or IP radio signal transmitted through a cable or by wireless radio frequency transmission;
- a digital television signal transmitted via satellite; and
- an analogue radio signal.

The digital television output signal may e.g. include a DVB-C, a DVB-T or DVB-T2 signal.

Dedicated front-end or back-end hardware modules may be needed in order to receive and output the various categories of signals.

The configuration data file may be created at a location remote from the headend facility and/or at a time prior to the physical configuration of the headend facility. Hence, an operator may e.g. conduct the entire configuration at a workstation remote from the headend, e.g. at an office space. Preferably, the creation of the configuration data file may be performed in an internet browser. At the remote location, a list of accessories and/or hardware components to be included in the headend facility may be provided. For example, the operator may select such accessories and/or hardware components from a list loaded into and displayed by the browser. The operator may generate an order list for the accessories and/or hardware components, and the order list may be sent off to a supplier, merchant or shipping facility, from which the requested accessories and/or hardware components are provided to an address as specified. For example, the accessories and/or hardware components may be shipped directly to the location of the headend facility.

The configuration data file may be transmitted to said hardware module of the headend facility via the internet, if the headend facility comprises hardware connected to the internet, or via a portable memory card, which is loaded into said hardware module of the headend facility.

The method of the first aspect of the invention may be combined with any and all features and method steps described herein with reference to the second and third aspects of the invention.

In a second aspect, the invention provides a method for managing a digital television signal, comprising the steps of:
- receiving a plurality of service signals with variable bit rate, each service signal including a video portion and an audio portion;
- assigning the plurality of service signals to one single frequency in an output bitstream;
- continuously monitoring if the accumulated bit rate of the received service signals exceeds the bandwidth available for the output bitstream;
- removing a predetermined part of the service signals from the output bit stream while preserving another portion, preferably the audio portion, of the service signals, in case the accumulated bit rate of the received service signals exceeds the bandwidth available for the output bitstream.

The invention also provides a headend facility for receiving video and/or audio signals for processing and distribution thereof to a plurality of recipients, the headend facility being configured to mange digital television signals by the method according to the second aspect of the invention. The headend facility may be configured by the method according to the first aspect of the invention.

The method of the second aspect of the invention may reduce the nuisance experienced by users and recipients during dropout periods in consequence of bandwidth overflow due to the fact that a predetermined part of the service signals is removed rather than randomly cutting of bits of the signals. For example, only the video or only the audio part of the service signals may be temporarily removed, while maintaining the other part. Once the total accumulated bit rate of the services is back below the available bandwidth, the temporarily removed part of the signal is reinstated. It has been found that maintaining the audio signal usually causes fewer nuisances among television viewers than maintaining the video signal only. Hence, in a preferred embodiment, the predetermined part of the service signals, which is temporarily removed is the video signal. However, an entire service or several services may be removed. It may suffice to remove e.g. the video and/or audio signal of a single service only while maintaining the video and audio signals on all other services. If teletext (i.e. 'text TV') is provided, the method of the third aspect of the invention may remove the teletext part of the signal in cases of bandwidth overflow.

The digital television signal may e.g. include a DVB-T, a DVB-T2 or a DVB-C signal.

The method of the second aspect of the invention may be combined with any and all features and method steps described herein with reference to the first and third aspects of the invention.

In a third aspect, the invention provides a headend facility for receiving video and/or audio signals for processing and distribution thereof to a plurality of recipients, wherein the headend facility is configured to receive at least two input signals received by separate receptors, the headend facility comprising an integrated hardware component configured to receive said at least two input signals and to distribute the television signals in accordance with user-specified selection of service particulars, so that services received by different ones of said receptors are passed on to a single shared output medium or a single shared output frequency.

The headend facility of the third aspect of the invention may be configured by the method of the first aspect of the invention. The headend facility of the third aspect of the invention may by configured to manage television signals by the method of the second aspect of the invention.

Thanks to the provision of the integrated hardware unit, which allows for processing of signals received by different receptors, e.g. a terrestrial antenna and an LNB of a satellite dish, or two signals from separate LNBs or separate satellite dishes, services which have been broadcasted by different means, e.g. an analogue terrestrial service and a digitally broadcasted signal transmitted via satellite, may be combined into a single PAL signal or multiplexed on to a single frequency of a digital output bitstream.

The receptors may include antennas for receiving terrestrial digital or analogue television or radio signals, LNBs (i.e. receiving heads for satellite dishes), wireless or wired network interfaces or any other type of receptor known *per* se.

The headend facility may for example be configured to pass the services received by the different receptors on to the shared output medium or shared output frequency by multiplexing the services.

The at least two input signals may be selected from the group consisting of:
- a terrestrial analogue television signal transmitted through the atmosphere;
- a terrestrial digital television signal, such as a DVB signal, transmitted through the atmosphere;
- a DVB or an IP television signal transmitted through a cable or by wireless radio frequency transmission;
- a first digital television signal transmitted via satellite;
- a digital or analogue radio signal; and
- an IP television or radio signal transmitted through a cable or by wireless radio frequency transmission.

The shared output medium may for example include PAL signals to be transmitted through a co-axial cable or digital signals, in which a plurality of services are multiplexed on to a single output frequency.

The headend facility may be configured to provide at least two categories of output signals selected from the group consisting of:
- an analogue television signal transmitted through a cable, such as an analogue PAL signal transmitted through a co-axial cable;
- a digital television signal transmitted through a cable, such as a DVB signal transmitted through a co-axial cable;
- an IP television or radio signal transmitted through a cable or by wireless radio frequency transmission; and
- a digital television signal transmitted via satellite;
- an analogue or digital radio signal transmitted via cable or radio frequency transmission.

In one embodiment, the headend facility may have a backend comprising output interfaces, to which appropriate transmission means for all or some of the above signals may be connected. For example a PAL interface may be provided for analogue signals, a digital interface may be provided for DVB-C, DVB-T or DVB-T2 signals, and a wired or wireless network interface may be provided for IP signals. The interfaces may be permanently integrated in a hardware module of the headend facility, or they may be provided as optional hardware components, which may be ordered separately as needed.

The headend of the third aspect of the invention may be combined with any and all features and method steps described herein with reference to the first and second aspects of the invention.

Embodiments of the invention will now be further described with reference to the drawings, in which:
Figs. 1 and 2 illustrate a prior art headend facility;
Fig. 3 illustrates an embodiment of a headend facility according to the third aspect of the present invention;
Figs. 4 and 5 are diagrams illustrating an embodiment of a method for configuring a headend facility according to the first aspect of the invention; and
Figs. 6-13 are screen dumps illustrating various steps of an embodiment of a method for configuring a headend facility according to the first aspect of the invention.

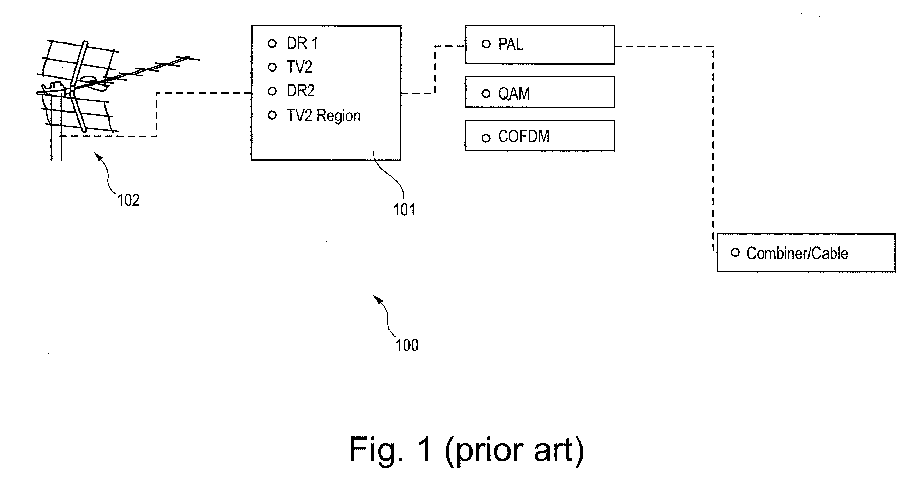

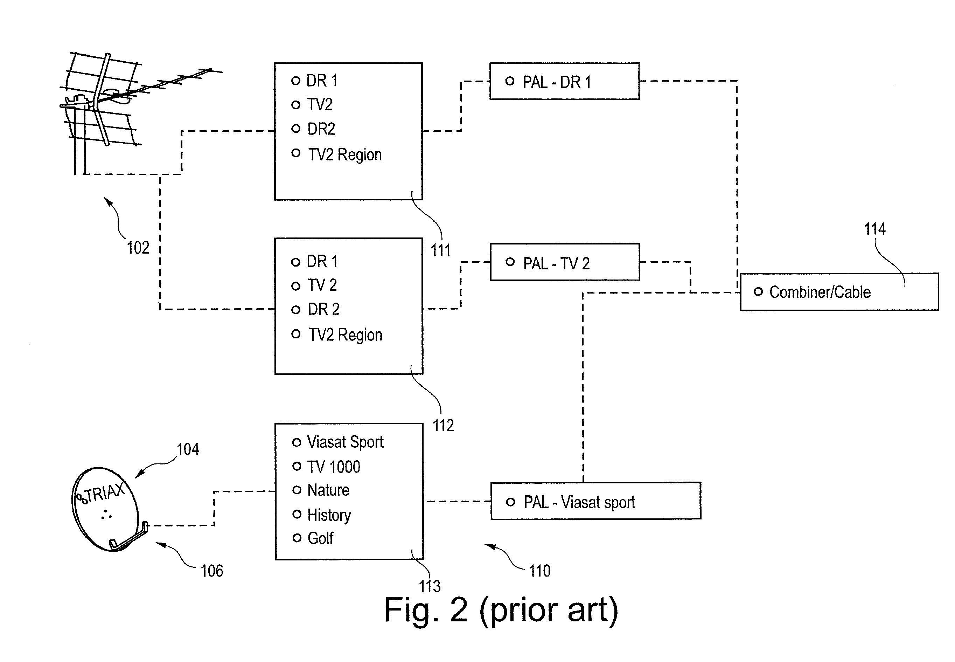

The prior art headend facility 100 of Fig. 1 is connected to a receptor illustrated in Fig. 1 as an antenna or a set of antennas 102. The signals received by the antenna include various television signals, illustrated in Fig. 1 as DR1, TV2, DR2, and TV2 Region. In the example of Fig. 1, a single hardware module 101 of the headend facility is configured to output the DR1 service via a PAL signal through a co-axial cable, which may optionally be connected to a so-called combiner for multiplexing it with other signals (see Fig. 2). The prior art headend facility 110 of Fig. 2 is further connected to a satellite dish 104 comprising an LNB receiving head 106. The set of antennas 102 receive analogue or digital terrestrial signals, illustrated in Fig. 2 as DR1, TV2, DR2, and TV2 Region. The satellite dish 104 and LNB 106 receive digital signals broadcasted via satellite, illustrated in Fig. 2 as Viasat Sport, TV 1000, Nature, History and Golf. The headend 110 comprises three hardware modules 111, 112 and 113, wherein first hardware module 111 is configured to output the DR1 service via a PAL signal. The second hardware module 112 is configured to output the TV2 service via a PAL signal, and the third hardware module 113 is configured to process the Viasat Sport service signal and transform it into analogue PAL format. The DR1, TV2 and Viasat Sport PAL signals are combined together or multiplexed at combiner 114, which at its backend comprises a PAL interface for transmission of the aforementioned three services via, e.g. a cable network.

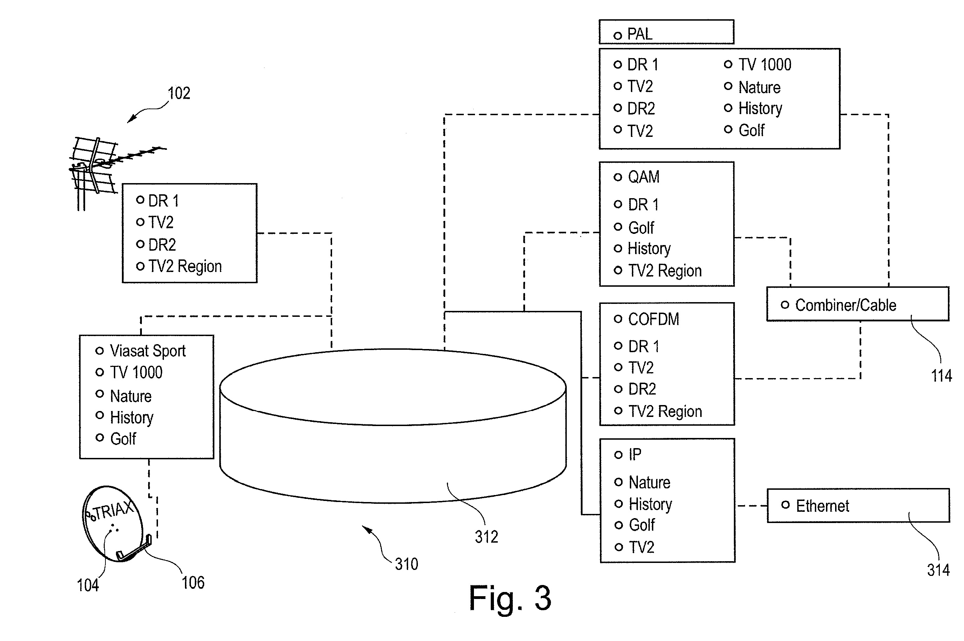

Fig. 3 illustrates a headend facility according to the third aspect of the invention. The set of antennas 102 receive terrestrially broadcasted services, such as DR1, TV2, DR2 and TV2 Region as illustrated. The satellite dish 104 and LNB 106 receive services broadcasted via satellite, such as Viasat Sport, TV 1000, Nature, History and Golf. Many more services may be received, and more receptors may be included, e.g. more antennas, satellite dishes, LNBs, Ethernet connections, radio frequency interfaces, etc. The services are pooled as shown at 312 to allow an operator to set up the headend facility to output various sets of services in various formats. In the example of Fig. 3, the headend comprises four outputs at its backend, including a PAL interface, a QAM interface, a COFDM interface, and an IP interface. As shown, the operator is free to choose which services are provided at the various outputs, and one service may be provided in different output formats. For example, TV2 is provided on the PAL port, the COFDM port, and the IP port. The PAL, QAM and COFDM outputs are combined at combiner 114, whereas an Ethernet connection is provided at the IP port. It will hence be appreciated that the embodiments of the headend facility of the third aspect of the invention may be configured to convert all input signals to a common format and to sort and/or duplicate them, and convert the signals to the desired output format. The pool of services 312 is available to the operator during the configuration phase of the headend facility in order to allow him to assign any input service to any output format (or output port). Each input service may be provided at a plurality of output ports having different formats or the same format. For example, one service, e.g. CNN, may be provided on two PAL ports and one COFDM port. The DVB-T, DVB-T2 or DVB-C signal formats may be provided for digital output.

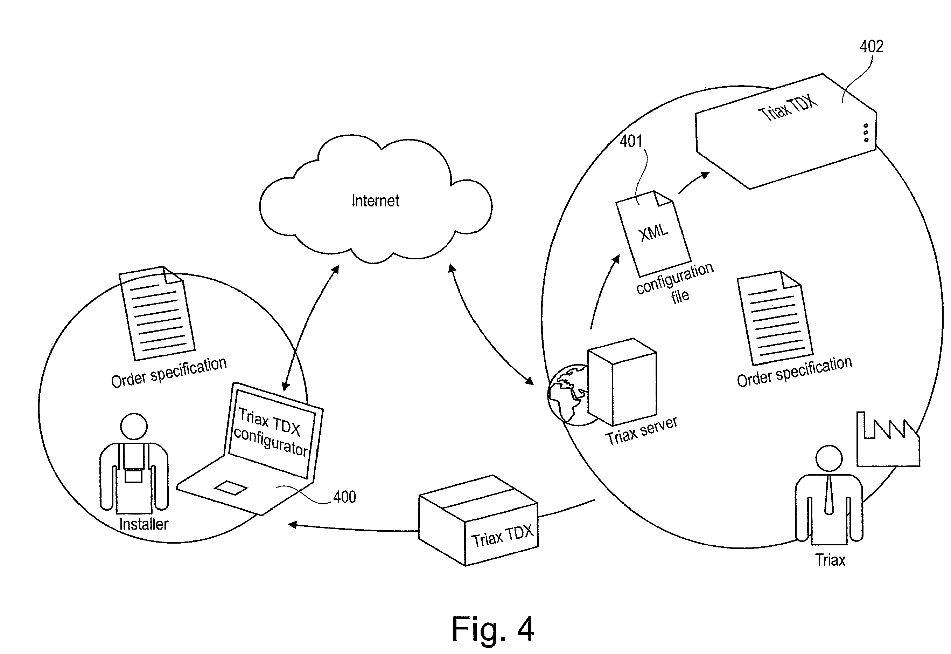

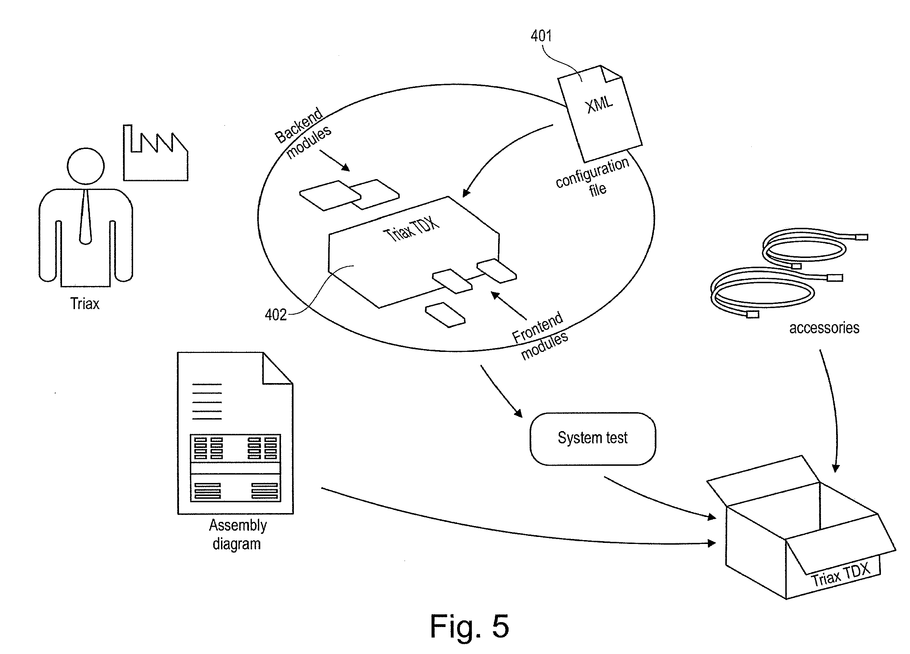

Figs. 4 and 5 are diagrams illustrating an embodiment of a method for configuring a headend facility according to the first aspect of the invention. As shown in Fig. 4, the operator (i.e. installer) generates an order specification at a workstation 400, which may e.g. include an ordinary PC. The order specification may include a list of hardware components or hardware accessories needed by the installer. Along with the order specification, the installer may generator a list of service (e.g. television and/or radio signals) eventually to be provided at the output of the headend facility to be configured (not shown in Fig. 4). The headend facility to be configured may be a headend facility of the type illustrated in Fig. 3.

The list of services and/or order list are processed into a configuration file 401 at the workstation 400 or at the site of a hardware supplier.

The installer sends the order specification along with the specification of services via a wide area network, such as the Internet, to the hardware supplier, such as Triax, the assignee of the present invention. At the supplier's site, the order specification and list of services are processed, and a headend hardware module 402 is configured in accordance with the configuration file, which is loaded into the hardware module 402 via a computer network, a portable memory card or any other appropriate medium. As shown in Fig. 5, the hardware module 402 is provided with back-end and front-end modules, such as appropriate data interfaces as specified by the installer, encryption and/or decryption cards, signal conversion modules etc. The hardware module 402 is subjected to a system test and packed along with an assembly diagram and the accessories, such as e.g. cables as specified by the installer in the order specification. The hardware module 402 is subsequently shipped to the installer or directly to the site of installation of the headend facility.

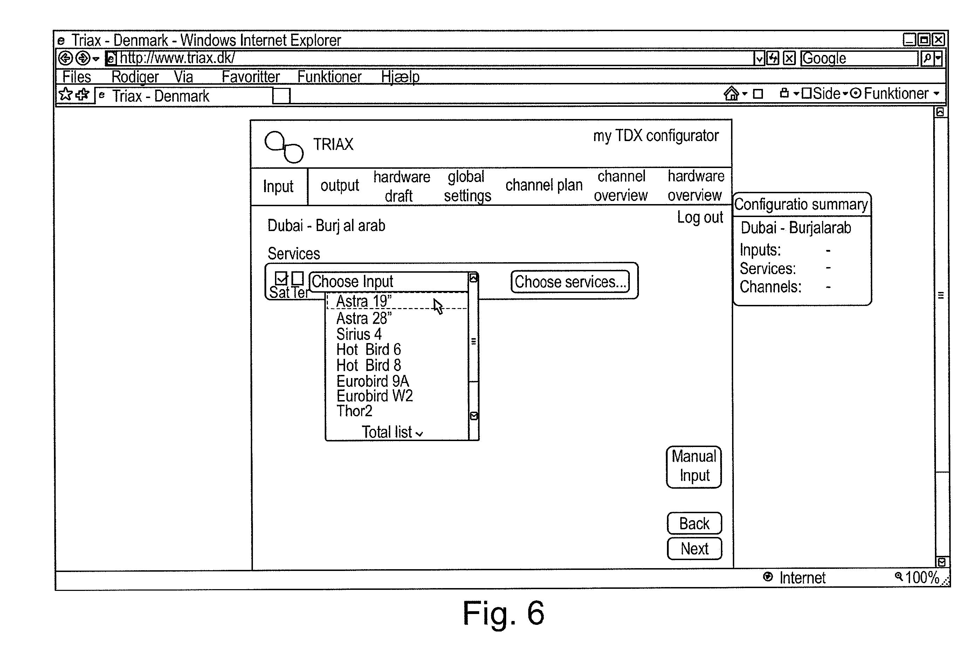

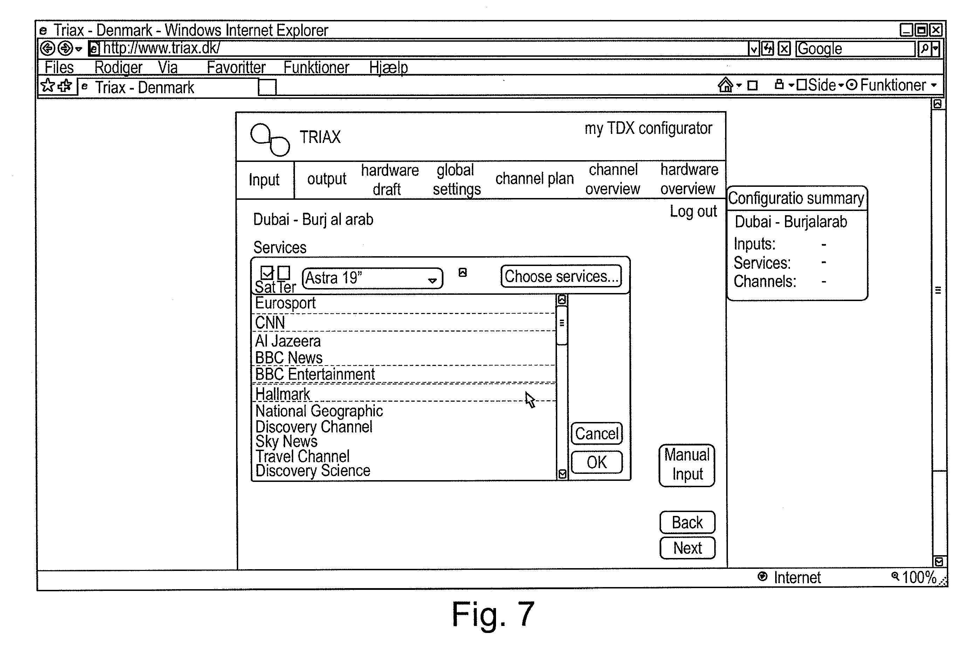

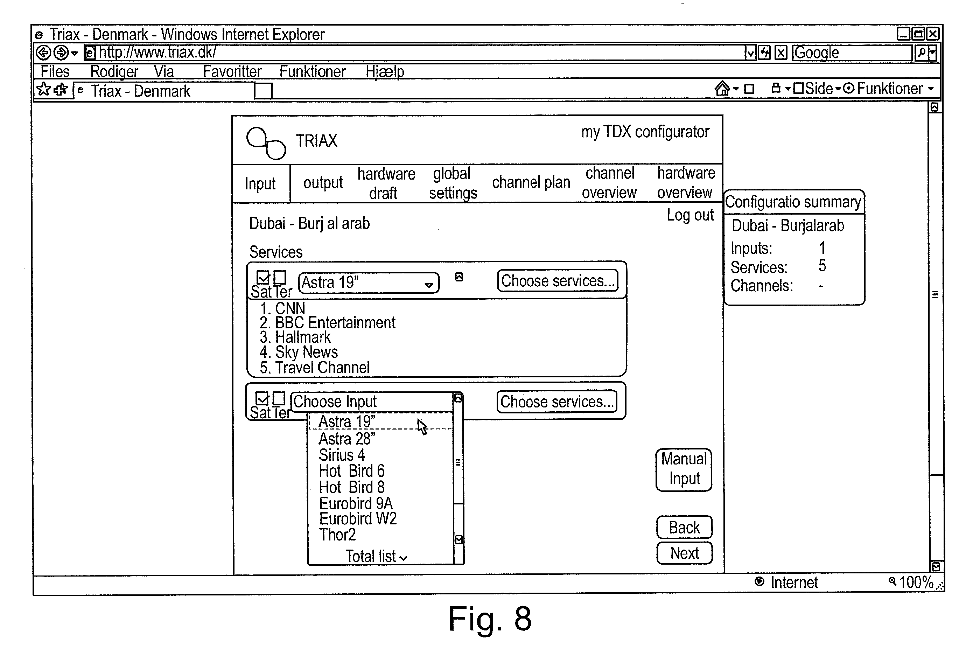

Figs. 6-13 are screen dumps illustrating various steps of an embodiment of a method for configuring a headend facility according to the first aspect of the invention as carried out by the installer at the workstation 400 (see Fig. 4). As shown in Fig. 6, the installer selects a first input in an initial step. The input defines that receptor, in the present example the Astra 19° satellite, from which the installer wishes to select services. In a next step, as shown in Fig. 7, the installer is presented with a list of services, i.e. television and/or radio programmes, available at the Astra 19° satellite, and those which are to be included in the output of the headend hardware module 402 (see Figs. 4 and 5) are selected. Fig. 8 illustrates that the installer has selected CNN, BBC Entertainment, Hallmark, Sky News and Travel Channel from the Astra 19° satellite. The installer then submits a next receptor or input, e.g. the Astra 28° satellite and repeats the above service selection procedure.

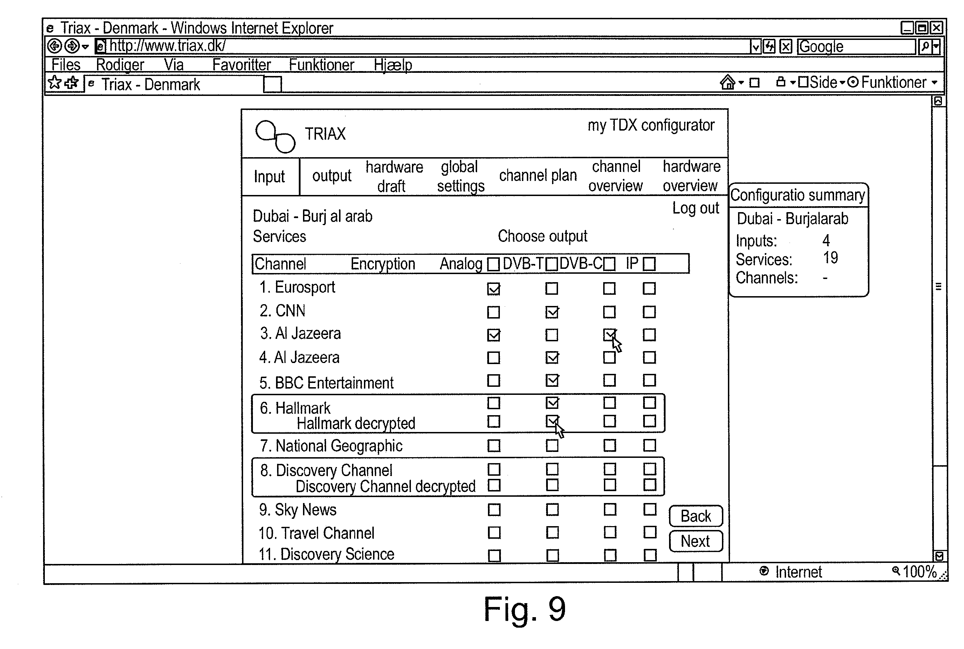

Once all the services to be distributed by the headend facility have been selected, the installer selects one or more output formats for each service by ticking boxes, as shown by the V signs in Fig. 9. The configuration summary at the upper right corner of the screen dump of Fig. 9 shows that 19 services have been selected, which derive from 4 inputs, i.e. receptors.

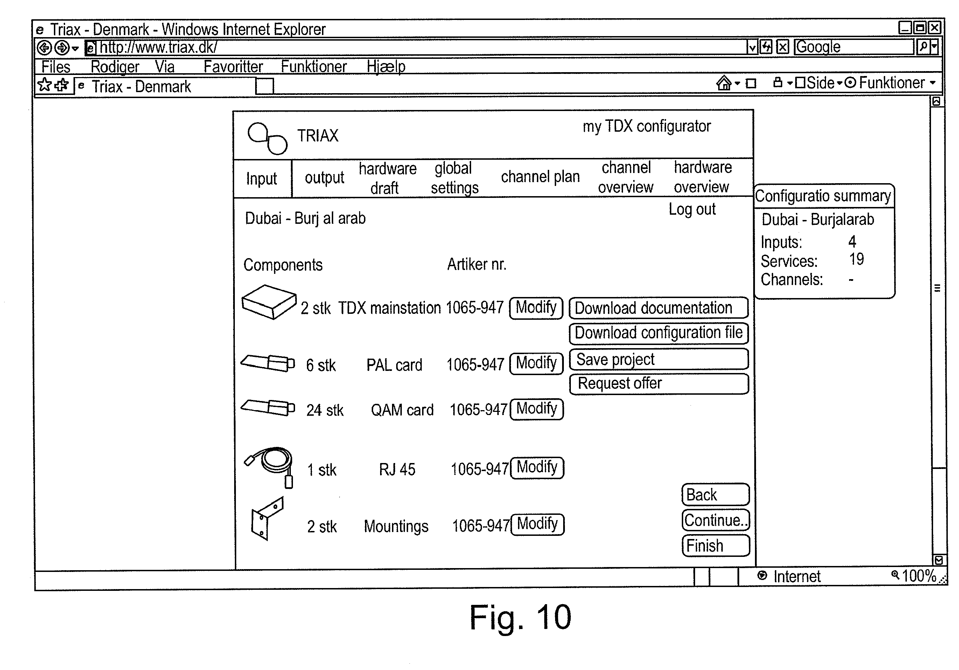

The installer further selects hardware components and hardware accessories from a predefined list of available components and accessories, as illustrated in the screen dump of Fig. 10. In the example shown, the installer has selected 2 main hardware modules, 6 PAL cards, 24 QAM cards, one RJ 45 cable, and 2 mountings.

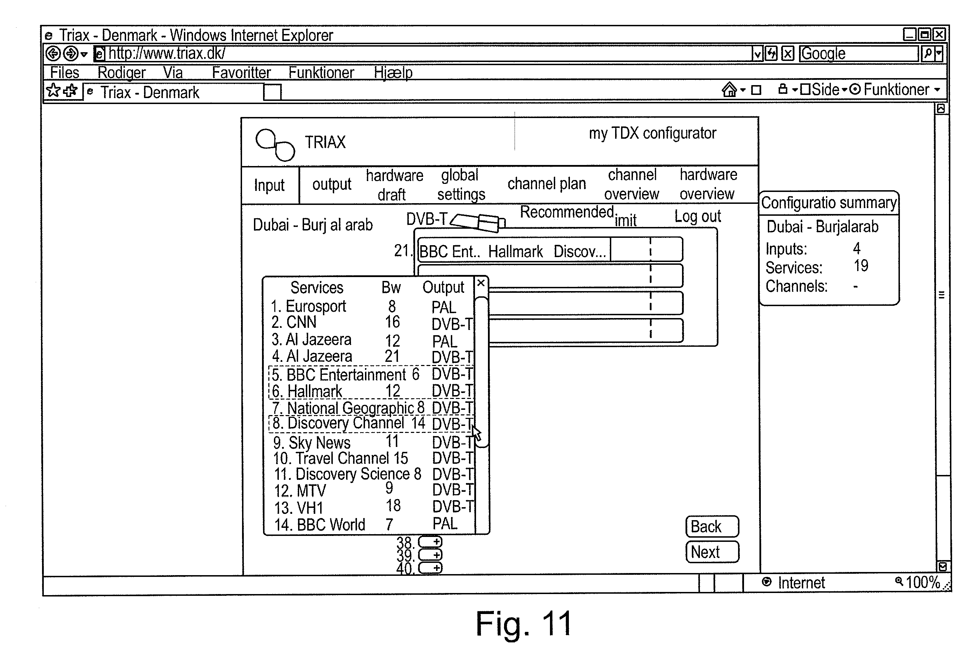

Additionally the operator assigns the selected services to the various available output frequencies for digital broadcasting. Each available frequency is given an identification number as indicated in the partially hidden window in the screen dump of Fig. 11. The partially hidden window shows a graphical illustration of the bandwidth available on each output frequency, and a vertical dashed line is included to illustrate the recommended limit for the accumulated estimated bandwidth of services assigned to each of the output frequencies. When the installer selects services for each output frequency in the front window in Fig. 11, the respective estimated bandwidths of each of the services are shown in the partially hidden window, allowing the installer to monitor if the estimated accumulated bandwidth of the selected services exceeds the recommended limit.

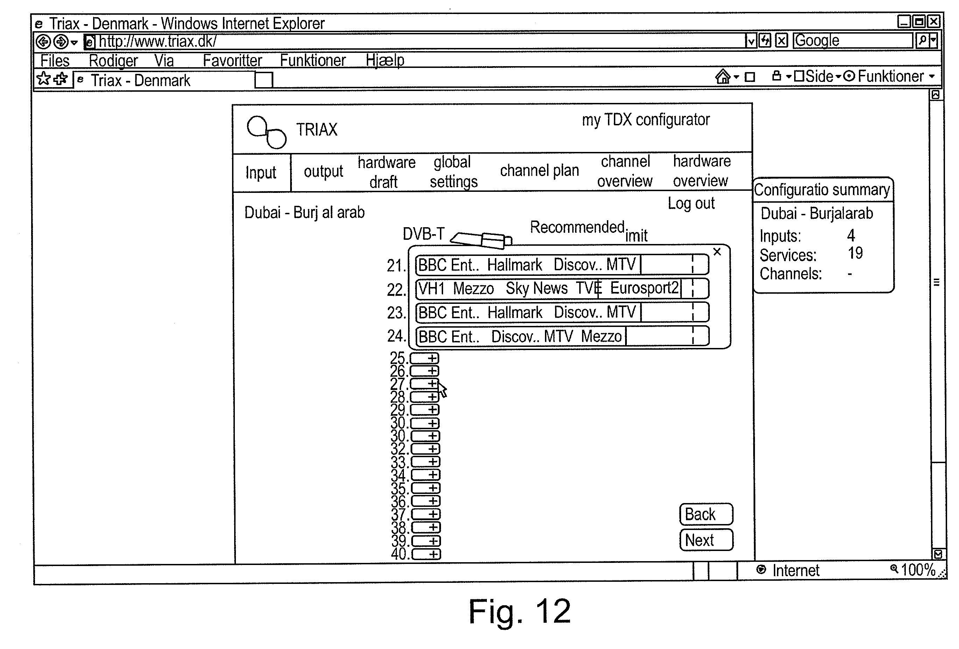

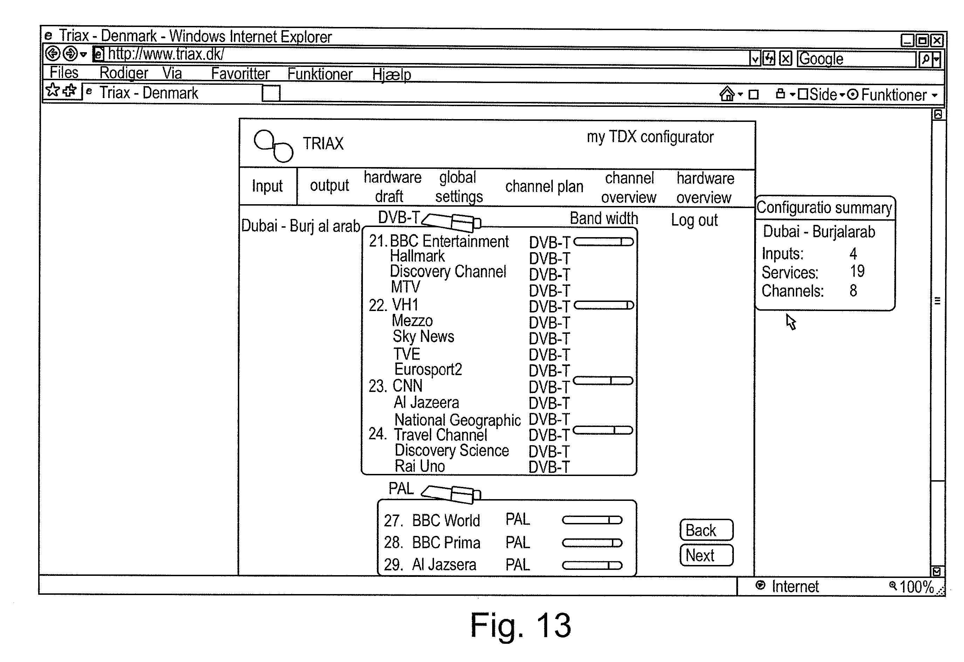

Fig. 12 shows an example of a finalized channel plan for the DVB-T output. On frequency No. 22, the estimated accumulated bandwidth exceeds the recommended limit. The installer may accept this, or he may change the distribution of services in order to obtain a different distribution. The final channel plan for the DVB-T and PAL outputs is shown in Fig. 13.

Once the channel plan is finalized, and a list of services and an order list has been generated (cf. Figs. 4 and 5), the configuration file is generated, and the hardware module 402 may be configured in accordance with the desired configuration as illustrated in Figs. 6-13.

## Claims

1. A method for configuring a headend facility for receiving video and/or audio signals for processing and distribution thereof to a plurality of recipients, the method comprising:
- receiving a user input specifying a selection of service particulars of the video and/or audio signals to be distributed;
- creating a configuration data file containing the user-specified selection of service particulars and/or ;
- loading said configuration data file into a hardware module of the headend facility for causing the headend facility to receive and distribute video and/or signals in accordance with the user-specified selection of service particulars contained in the configuration data file.

2. A method according to claim 1, wherein the user-specified selection of service particulars includes service multiplexing information, including identification of a plurality of services modulated on to a single output frequency.

3. A method according to claim 2, wherein the step of receiving the user input is performed through a user interface of a computer system, which is configured to allow a user or operator to assign a plurality of services to a selected output frequency, the user interface being further configured to display a representation of the accumulated bandwidth occupied by the services assigned to the selected frequency.

4. A method according to claim 3, wherein the user interface is configured to allow the user or operator to remove a service assigned to the selected frequency, before the configuration data file is loaded into the hardware module of the headend facility.

5. A method according to claim 3 or 4, wherein the user interface includes an indication of a recommended limit for the accumulated estimated bandwidths of services assigned to a particular frequency, and wherein the user interface is configured to display a comparison between said limit and the accumulated estimated bandwidths of services assigned to the particular frequency.

6. A method according to any of claims 3-5, wherein the estimated bandwidth of each service is provided by a data file created on the basis of statistical processing of historical bandwidth occupation of each of service.

7. A method according to claim 1, wherein the headend receives at least two categories of input signals selected from the group consisting of:
- a terrestrial analogue television signal transmitted through the atmosphere;
- a terrestrial digital television signal, such as a DVB signal, transmitted through the atmosphere;
- a DVB or an IP television signal transmitted through a cable or by wireless radio frequency transmission;
- a digital television signal transmitted via satellite;
- a digital or analogue radio signal and;
- an IP television or radio signal transmitted through a cable or by wireless radio frequency transmission.

8. A method according to claim 7, wherein the headend facility comprises an integrated hardware component configured to receive said at least two categories of input signals, and to distribute the television and/or radio signals in accordance with the user-specified selection of service particulars via at least two categories of output signals selected from the group consisting of:
- an analogue television signal transmitted through a cable, such as an analogue PAL signal transmitted through a co-axial cable;
- a digital television signal transmitted through a cable, such as a DVB signal transmitted through a co-axial cable;
- an IP television or IP radio signal transmitted through a cable or by wireless radio frequency transmission;
- a digital television signal transmitted via satellite; and
- an analogue radio signal.

9. A method according to any of the preceding claims, wherein the configuration data file is created at a location remote from the headend facility.

10. A method according to claim 9, further comprising the steps of:
- receiving, at said remote location, a list of accessories and/or hardware components to be included in the headend facility;
- generating an order list for the accessories and/or hardware components; and
- providing the accessories and/or hardware components to the location of the headend facility.

11. A method according to claim 9 or 10, wherein the configuration data file is transmitted to said hardware module of the headend facility via the Internet.

12. A method according to claim 9 or 10, wherein the configuration data file is loaded onto a portable memory card, which is loaded into said hardware module of the headend facility.

13. A method according to any of claims 9-12, wherein the list of accessories and/or hardware components to be included in the headend facility is generated by a user or operator in a user interface of a computer system, which is configured to present a list of available accessories and/or hardware components to the user or operator.

14. A headend facility for receiving video and/or audio signals for processing and distribution thereof to a plurality of recipients, the headend facility being configured by a method according to any of claims 1-13.

15. A method for managing a digital television signal, comprising the steps of:
- receiving a plurality of service signals with variable bit rate, each service signal including a video portion and an audio portion;
- assigning the plurality of service signals to one single frequency in an output bitstream;
- continuously monitoring if the accumulated bit rate of the received service signals exceeds the bandwidth available for the output bitstream;
- removing a predetermined part of the service signals from the output bit stream while preserving another portion of the service signals, in case the accumulated bit rate of the received service signals exceeds the bandwidth available for the output bitstream.

16. A headend facility for receiving video and/or audio signals for processing and distribution thereof to a plurality of recipients, the headend facility being configured to mange digital television signals by a method according to claim 15.

17. A headend facility according to claim 16, configured by a method according to any of claims 1-13.

18. A headend facility for receiving video and/or audio signals for processing and distribution thereof to a plurality of recipients, wherein the headend facility is configured to receive at least two input signals received by separate receptors, the headend facility comprising an integrated hardware component configured to receive said at least two input signals and to distribute the television signals in accordance with user-specified selection of service particulars, so that services received by different ones of said receptors are passed on to a single shared output medium or a single shared output frequency.

19. A headend facility according to claim 18, where the at least two input signals are selected from the group consisting of:
- a terrestrial analogue television signal transmitted through the atmosphere;
- a terrestrial digital television signal, such as a DVB signal, transmitted through the atmosphere;
- a DVB or an IP television signal transmitted through a cable or by wireless radio frequency transmission;
- a first digital television signal transmitted via satellite;
- a digital or analogue radio signal; and
- an IP television or radio signal transmitted through a cable or by wireless radio frequency transmission.

20. A headend facility according to claim 18 or 19, wherein the headend facility is configured to provide at least two categories of output signals selected from the group consisting of:
- an analogue television signal transmitted through a cable, such as an analogue PAL signal transmitted through a co-axial cable;
- a digital television signal transmitted through a cable, such as a DVB signal transmitted through a co-axial cable;
- an IP television or radio signal transmitted through a cable or by wireless radio frequency transmission;
- a digital television signal transmitted via satellite; and
- an analogue or digital radio signal transmitted via cable or radio frequency transmission.

21. A headend facility according to any of claims 18-20, configured by a method according to any of claims 1-13.

22. A headend facility according to any of claims 18-21, which is configured to manage television signals by a method according to claim 15.
